# EUROPEAN PATENT APPLICATION

(11) **EP 3 346 685 A1**
(43) Date of publication of application: **11.07.2018**
(21) Application number: 18150308.7
(22) Date of filing: 04.01.2018
(51) Int. Cl.: H04N 1/00

(54) **INPUT/OUTPUT DEVICE AND INFORMATION PROCESSING SYSTEM**

(30) Priority: 10.01.2017 JP 2017001861; 22.06.2017 JP 2017122623
(71) Applicant: Ricoh Company Ltd., Ohta-ku Tokyo 143-8555 (JP)
(72) Inventor: TOKIWA, Masafumi, Tokyo, 143-8555 (JP); HASHIKAMI, Hidenobu, Tokyo, 143-8555 (JP)
(74) Representative: Schwabe - Sandmair - Marx

(57) **Abstract**

An input/output device (10) having a web browser (12) installed therein includes a content acquisition unit (20) that acquires content of a function screen (1200) and content of an information setting screen (1000, 1100); an information setting screen control unit (22) that accepts setting information required for generating a job setting from a user via the information setting screen (1000, 1100) that is displayed by the web browser (12) using the acquired content of the information setting screen and stores the accepted setting information required for generating the job setting in a web storage (28) of the web browser (12); a function screen control unit (24) that uses the acquired content of the function screen to generate the job setting based on the setting information stored in the web storage (28) and displays the generated job setting on the function screen (1200) that is displayed by the web browser (12); and a job execution unit (26) that executes a job using a function specific to the input/output device (10) according to the generated job setting in response to an instruction accepted from the user via the function screen (1200).

## Description

### BACKGROUND OF THE INVENTION

### 1. Field of the Invention

The present invention relates to an input/output device and an information processing system.

### 2. Description of the Related Art

Services are known that enable cooperation between a document input/output device, such as a multifunction peripheral (MFP), and a computer system that provides an external storage service offering a storage area via a network (hereinafter referred to as a device cooperation service). A "scan to storage service" is an example of such a device cooperation service that is used to deliver image data scanned by an application of a multifunction peripheral to a preset external storage service.

For example, an application for implementing a function of transmitting scanned image data to a preset destination may be installed in an image forming apparatus. Also, online storage services and other cloud services are known that are designed to accept image data over a network, such as the Internet, and implement a predetermined process with respect to the image data (see e.g., Japanese Unexamined Patent Publication No. 2014-130570).

In order to implement a device cooperation service, an application to be installed in an input/output device, such as a multifunction peripheral, has to be developed. However, development of an application to be installed in an input/output device, such as a multifunction peripheral, is quite difficult for a developer because it requires implementations relating to functions specific to the input/output device, such as a scan function and a print function, for example.

### SUMMARY OF THE INVENTION

An aspect of the present invention is directed to providing a technique for facilitating development of an application that uses a function specific to an input/output device.

According to one embodiment of the present invention, an input/output device having a web browser installed therein is provided that includes a content acquisition unit configured to acquire content of a function screen for accepting a request relating to a function specific to the input/output device from a user and content of an information setting screen for accepting setting information required for generating a job setting from the user, an information setting screen control unit configured to accept the setting information required for generating the job setting from the user via the information setting screen that is displayed by the web browser using the acquired content of the information setting screen and store the accepted setting information required for generating the job setting in a web storage of the web browser, a function screen control unit configured to use the acquired content of the function screen to generate the job setting based on the setting information stored in the web storage and display the generated job setting on the function screen that is displayed by the web browser, and a job execution unit configured to execute a job using the function specific to the input/output device according to the generated job setting in response to an instruction accepted from the user via the function screen.

### BRIEF DESCRIPTION OF THE DRAWINGS

FIG. 1 is a diagram illustrating an example configuration of an information processing system according to an embodiment of the present invention;
FIG. 2 is a diagram illustrating an example hardware configuration of a computer according to an embodiment of the present invention;
FIG. 3 is a diagram illustrating an example hardware configuration of a multifunction peripheral according to an embodiment of the present invention;
FIG. 4 is a diagram illustrating an example functional configuration of the information processing system according to an embodiment of the present invention;
FIG. 5 is a diagram illustrating example screen transitions of a web application;
FIG. 6 is a diagram illustrating example setting values passed to a scan screen;
FIG. 7 is a sequence chart illustrating example process operations of a scan upload process according to an embodiment of the present invention;
FIG. 8 is a diagram illustrating an example of a scan screen that has an additional setting item;
FIG. 9 is a diagram illustrating example setting items that may be passed to the scan screen with the additional setting item;
FIG. 10 is a diagram illustrating example setting items relating to an error message that may be passed to the scan screen;
FIG. 11 is a diagram illustrating an example error screen;
FIG. 12 is a sequence chart illustrating example process operations of the scan upload process when an upload job fails;
FIG. 13 is a diagram illustrating example setting items relating to setting exclusions that may be passed to the scan screen;
FIG. 14 is a diagram illustrating another example the scan screen that reflects settings relating to display;
FIG. 15 is diagram illustrating example setting items relating to display that may be passed to the scan screen;
FIG. 16 is a diagram illustrating an example setting for immediately executing a job passed to the scan screen; and
FIG. 17 is a sequence chart illustrating example process operations of the scan upload process when a job is to be immediately executed.

### DESCRIPTION OF THE PREFERRED EMBODIMENTS

In the following, embodiments of the present invention are described with reference to the accompanying drawings. Note that in the embodiments described below, a scan upload process of uploading scanned imaged data obtained by a multifunction peripheral (MFP) to an upload destination server apparatus is illustrated as an example of a device cooperation service.

### <System Configuration>

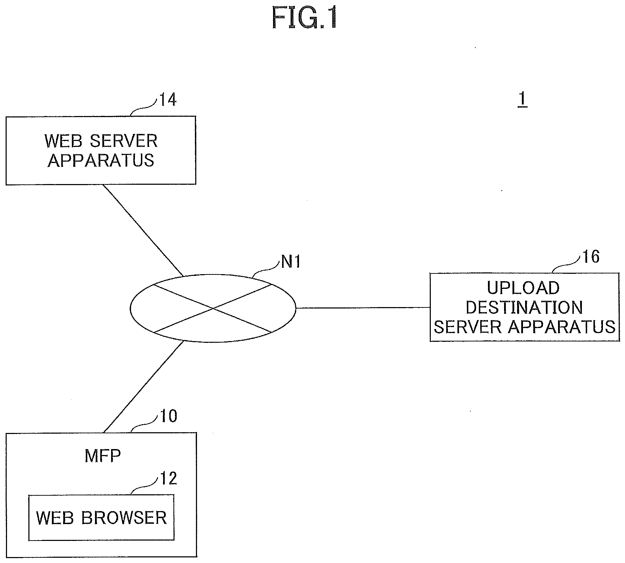

FIG. 1 is a diagram illustrating an example configuration of an information processing system 1 according to an embodiment of the present invention. The information processing system 1 includes an MFP 10, a web server apparatus 14, and an upload destination server apparatus 16 that are connected to each other via a network N1, such as the Internet.

The MFP 10 is an example of an input/output device that has a web browser 12 installed therein. Note that the input/output device having the web browser 12 installed therein may be an image forming apparatus, such as a multifunction peripheral (MFP), a scanner, a printer, a facsimile machine, a projector, or a digital whiteboard, or some other type of electronic device having the web browser 12 installed therein.

The web server apparatus 14 is an example of a content providing apparatus that provides web page screen data (content) to the web browser 12 of the MFP 10 via the network N1. The upload destination server apparatus 16 is an example of an upload destination for uploading an image scanned by the MFP 10. The upload destination server apparatus 16 provides various services such as a cloud service.

Note that the network N1 of the information processing system 1 of FIG. 1 may be a wired communication network or a wireless communication network. Also, note that FIG. 1 merely illustrates one example configuration of the information processing system 1. In other examples, the web server apparatus 14 may be configured by a plurality of computers. Also, the upload destination server apparatus 16 may be configured by a plurality of computers, for example.

### <Hardware Configuration>

### <<Computer>>

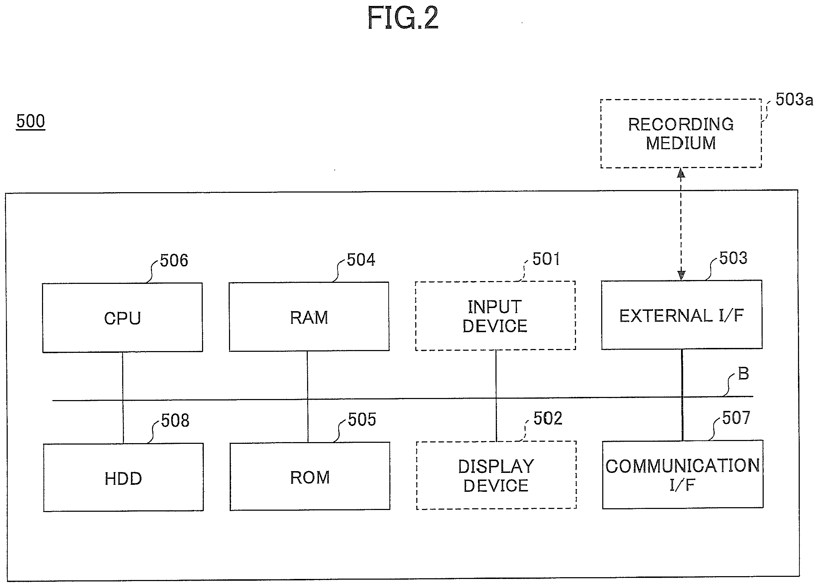

The web server apparatus 14 and the upload destination server apparatus 16 may be implemented by a computer having a hardware configuration as illustrated in FIG. 2, for example. FIG. 2 is a diagram illustrating an example hardware configuration diagram of a computer 500 according to an embodiment of the present invention.

In FIG. 2, the computer 500 includes an input device 501, a display device 502, an external I/F (interface) 503, a RAM (random access memory) 504, a ROM (read-only memory) 505, a CPU (central processing unit) 506, a communication I/F 507, a HDD (hard disk drive) 508 that are connected to each other via a bus B. Note that in some embodiments, the input device 501 and the display device 502 may be connected and used as necessary.

The input device 501 may include a keyboard, a mouse, and/or a touch panel, for example, and is used by a user to input an operation signal. The display device 502 may include a display for displaying processing results of processes executed by the computer 500, for example.

The communication I/F 507 is an interface connecting the computer 500 to various networks. In this way, the computer 500 can perform data communication via the communication I/F 507.

The HDD 508 is an example of a nonvolatile storage device that stores programs and data. The stored programs and data include an OS corresponding to basic software for controlling the entire computer 500 and application software (hereinafter simply referred to as "application") that provides various functions on the OS. Note that in some embodiments, the computer 500 may use a drive device that uses a flash memory as a storage medium, such as an SDD (solid state drive), instead of the HDD 508, for example.

The external I/F 503 is an interface with an external device. The external device may include a recording medium 503a, for example. In this way, the computer 500 can read and/or write data from/to the recording medium 503a via the external I/F 503. The recording medium 503a may be a flexible disk, a CD, a DVD, an SD memory card, a USB memory, or the like.

The ROM 505 is an example of a nonvolatile semiconductor memory (storage device) that can hold programs and data even when the power is turned off. The ROM 505 stores programs and data such as a basic input-output system (BIOS) that is executed when the computer 500 is started, OS settings, network settings, and the like. The RAM 504 is an example of a volatile semiconductor memory (storage device) that temporarily holds programs and data.

The CPU 506 is a computing device that implements functions of the computer 500 and performs overall control of the computer 500 by loading a program and/or data from a storage device, such as the ROM 505 or the HDD 508, into the RAM 504, and executing relevant processes.

The web server apparatus 14 and the upload destination server apparatus 16 may use the computer 500 having the hardware configuration as illustrated in FIG. 2 to implement various processes as described below, for example.

### <<<MFP>>

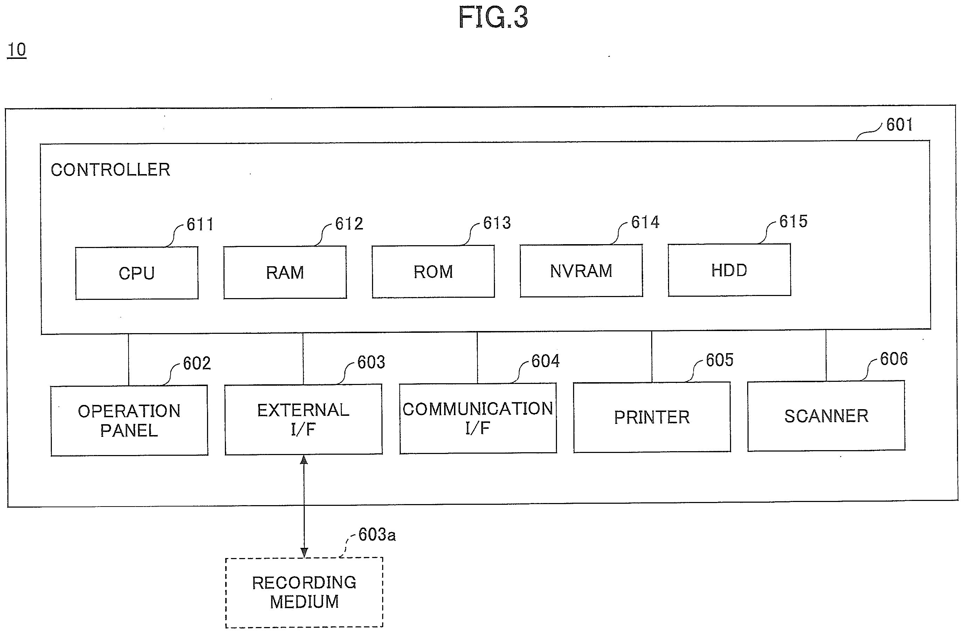

The MFP 10 of FIG. 1 may be implemented by a computer having a hardware configuration as illustrated in FIG. 3, for example. FIG. 3 is diagram illustrating an example hardware configuration of the MFP 10 according to the present embodiment. In FIG. 3, the MFP 10 includes a controller 601, an operation panel 602, an external I/F 603, a communication I/F 604, a printer 605, and a scanner 606.

The controller 601 includes a CPU 611, a RAM 612, a ROM 613, an NVRAM 614, and an HDD 615. The ROM 613 stores various programs and data. The RAM 612 temporarily holds programs and data. The NVRAM 614 may store setting information and the like. The HDD 615 may store various programs and data.

The CPU 611 implements functions of the MFP 10 and performs overall control of the MFP 10 by loading a program, data, and/or setting information from a storage device, such as the ROM 613, the NVRAM 614, and/or the HDD 615, into the RAM 612, and executing relevant processes.

The operation panel 602 includes an input unit that accepts an input from a user and a display unit that displays information. The external I/F 603 is an interface with an external device. The external device may be a recording medium 603a, for example. In this way, the MFP 20 can read and/or write data from/to the recording medium 603a via the external I/F 603. The recording medium 603a may be an IC card, a flexible disk, a CD, a DVD, an SD memory card, or a USB memory, for example.

The communication I/F 604 is an interface connecting the MFP 10 to the network N1. In this way, the MFP 10 can perform data communication via the communication I/F 604. The printer 605 is a device for printing print data on a print medium, such as paper. The scanner 606 is a device for scanning a document to acquire image data (electronic data) of the document.

### <Functional Configuration>

In the following, the functional configuration of the information processing system 1 according to the present embodiment will be described.

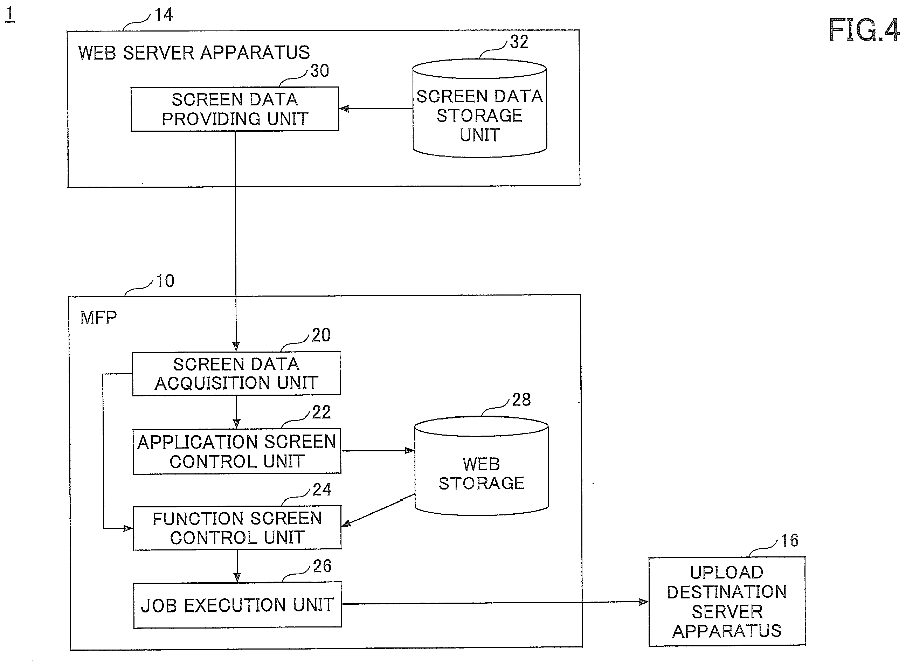

FIG. 4 is a diagram illustrating an example functional configuration of the information processing system 1 according to an embodiment of the present invention.

The web server apparatus 14 in the information processing system 1 includes a screen data providing unit 30 and a screen data storage unit 32. The screen data storage unit 32 stores screen data of an application screen and screen data of a scan screen as described below. The screen data providing unit 30 provides the screen data of the application screen or the screen data of the scan screen stored in the screen data storage unit 32 in response to a screen acquisition request from the MFP 10.

The MFP 10 in the information processing system 1 includes a screen data acquisition unit 20, an application screen control unit 22, a function screen control unit 24, a job execution unit 26, and a web storage 28.

The screen data acquisition unit 20 acquires screen data of an application screen or screen data of a scan screen from the web server apparatus 14. Note that the screen data of the application screen or the screen data of the scan screen is an example of a web application that is run on the web browser 12 installed in the MFP 10. The screen data of the application screen or the screen data of the scan screen may be described in HTML (Hypertext Markup Language) and JavaScript (registered trademark), for example.

The application screen control unit 22, the function screen control unit 24, and the job execution unit 26 may each be implemented by the CPU 611 executing a web application on the web browser 12 installed in the MFP 10, for example. The application screen control unit 22 displays an application screen on the operation panel 602 based on the screen data of the application screen.

The application screen is an example of an information setting screen that accepts setting information required for generating a job setting from a user. Examples of such setting information include a selection of a delivery destination folder and a file name setting. The scan screen is an example of a function screen that accepts a request relating to a function specific to the input/output device from a user. Examples of such a request include a change request for changing a scan setting or an execution request for executing a scan upload process. The scan screen also requests the job execution unit 26 to execute a scan upload process.

The application screen control unit 22 stores the selected delivery destination folder and the file name setting (setting values) accepted from the user via the application screen in the web storage 28. The web storage 28 may also be referred to as a local storage and is a mechanism for storing data in the user's local environment, such as the web browser 12.

The function screen control unit 24 generates a job setting for a scan upload process based on the setting values acquired from the web storage 28 and displays the job setting on the scan screen. The function screen control unit 24 changes the job setting in response to a change request accepted from the user. Upon accepting an execution request to execute the scan upload process from the user, the function screen control unit 24 requests the job execution unit 26 to execute the scan upload process according to the job setting.

In turn, the job execution unit 26 scans a document using the scanner 606 and uploads the scanned image data of the document to the delivery destination folder of the upload destination server apparatus 16 according to the job setting.

### <Process>

In the following, process operations of the information processing system 1 according to the present embodiment will be described.

### <<Web Application Screen Transitions>>

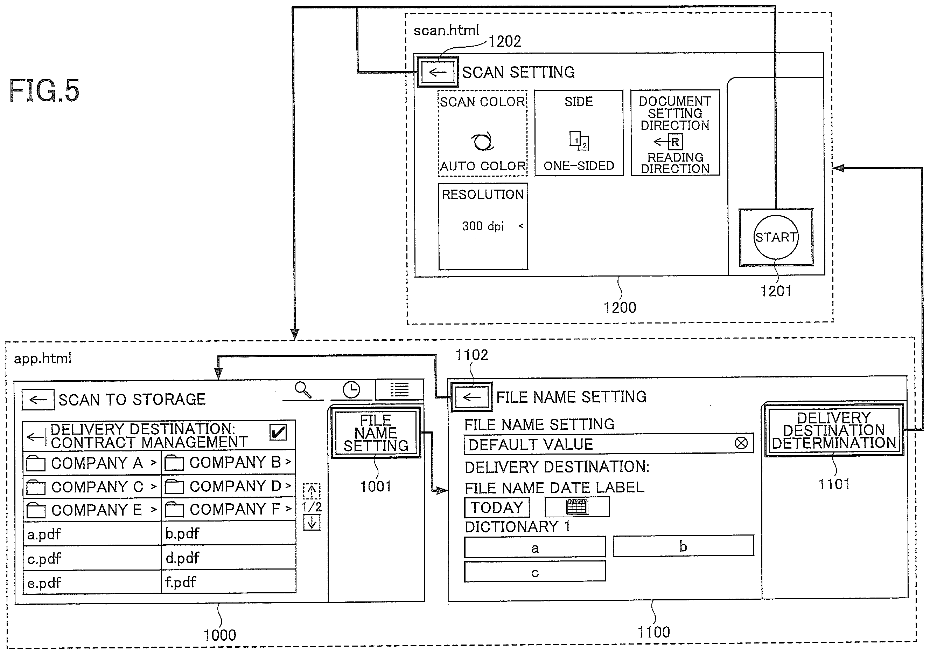

FIG. 5 is a diagram illustrating example screen transitions of a web application. In FIG. 5, application screens 1000 and 1100 are example screens displayed by screen data "app.html", and a scan screen 1200 is an example screen displayed by screen data "scan.html".

Screen data of the application screens 1000 and 1100 are developed by a web application developer, for example. A web application according to the present embodiment scans a document using the scanner 606 and uploads a file containing the scanned image data of the document to the upload destination server apparatus 16 in response to a request from a user.

The application screen 1000 is an example screen for enabling a user to select a delivery destination folder of the upload destination server apparatus 16. When the user presses a file name setting button 1001 of the application screen 1000, the application screen 1000 is switched to the application screen 1100. The application screen 1100 is an example of a screen for setting the file name of image data to be scanned. When the user presses a delivery destination determination button 1101 of the application screen 1100, the application screen 1100 is switched to the scan screen 1200.

The scan screen 1200 is used by the web application developer and the like. The scan screen 1200 displays the current scan setting and also accepts a scan setting change request from the user. Note that when a return button 1202 of the scan screen 1200 is pressed by the user, the scan screen 1200 is switched back to the application screen 1100. Also, when a return button 1102 of the application screen 1100 is pressed by the user, the application screen 1100 is switched back to the application screen 1000.

When a start button 1201 of the scan screen 1200 is pressed by the user, the MFP 10 starts executing a scan upload process according to the scan setting displayed on the scan screen 1200.

Note that the application screens 1000 and 1100 illustrated in FIG. 5 are example screens for selecting a delivery destination folder or setting a file name. The application screens 1000 and 1100 contain process components that are not difficult to implement for the web application developer. On the other hand, the scan screen 1200, which is for specifying a scan setting and executing a scan upload process, is quite difficult to implement for the web application developer that is not familiar with the applications installed in the MFP 10. For example, to develop the scan screen 1200, the web application developer needs to be able to determine whether the MFP 10 is capable of implementing a particular scan setting and know what will be displayed during execution of a scan process.

As described above with respect to FIG. 5, according to an aspect of the present embodiment, process components that are difficult to develop for a developer that is not familiar with the application of the MFP 10 are extracted and provided to the user as the scan screen 1200. In the present embodiment, the application screens 1000 and 1100 that are not difficult for the web application developer to develop are developed, and setting values input to the application screens 1000 and 1100 are passed to the scan screen 1200 via the web storage 28.

The scan screen 1200 enables execution of a job using a function specific to the MFP 10 according to the setting values passed from the application screens 1000 and 1100. As can be appreciated from the above, according to an aspect of the present embodiment, even a developer that is not familiar with technical details specific to the MFP 10 can easily develop a web application for the MFP 10.

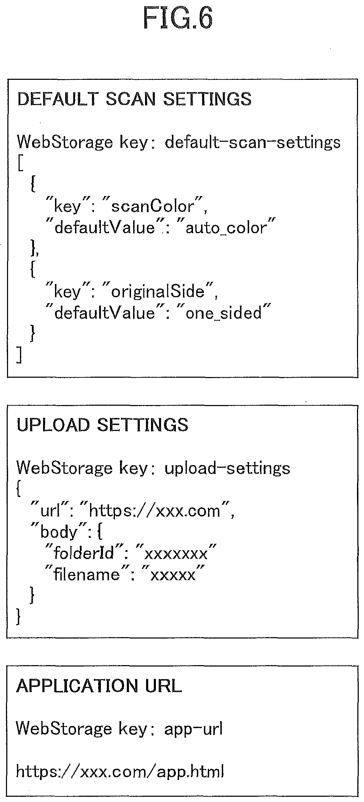

FIG. 6 illustrates example setting values that are passed to the scan screen 1200 via the web storage 28. Specifically, FIG. 6 illustrates default scan settings, upload settings, and an application URL as example setting values passed to the scan screen 1200. Note that when no change is made to the scan settings via the scan screen 1200, the MFP 10 executes a scan job according to the default scan settings.

The upload settings include the delivery destination folder selected via the application screen 1000 and the file name set up via the application screen 1100. The MFP 10 uploads a file containing scanned image data to a URL specified in the upload settings based on the header and the body specified in the upload settings.

The application URL includes the URL of the application screen 1000 or 1100 so that the scan screen 1200 can be switched back to the application screen 1000 or 1100 after a scan job is executed or when no scan job is executed.

Note that although the scan screen 1200 acquires the setting values for the scan setting via the web storage 28 in the above-described embodiment, the present invention is not limited thereto. In some embodiments, the scan screen 1200 may acquire the setting values from an index database, for example. In this case, the scan screen 1200 may acquire the setting values from the index database using a query. By acquiring the setting values using a query, the acquired setting values may also be passed to another scan screen 1200 that is hosted in another domain, for example.

In the case of using the web storage 28, when a plurality of web applications implement the scan screen 1200, the same key may be used as the key of the web storage 28. Thus, in some embodiments, a suffix of the key of the web storage 28 may be specified in a query as follows, for example.

URL to access Scan Screen 1200:
scan.html?keySuffix=hoge

Key of Web Storage 28:
default-scan-settings_hoge

### <<Process Operations>>

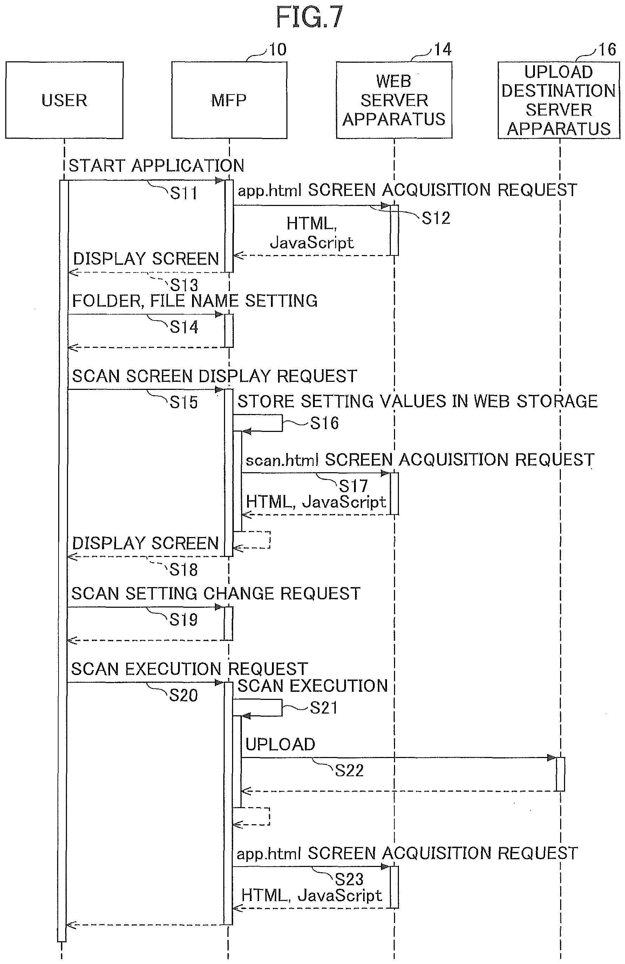

FIG. 7 is a sequence chart illustrating example process operations of a scan upload process according to an embodiment of the present invention.

In step S11, the user operates the MFP 10 to start a web application. Then, in step S12, the screen data acquisition unit 20 of the MFP 10 sends a screen acquisition request for acquiring screen data of the application screens 1000 and 1100 to the web server apparatus 14 and acquires the screen data of the application screens 1000 and 1100 from the screen data providing unit 30 of the web server apparatus 14.

Then, in step S13, the application screen control unit 22 of the MFP 10 displays the application screen 1000 or 1100 on the operation panel 602 using the acquired screen data. In step S14, the user selects a delivery destination folder of the upload destination server apparatus 16 via the application screen 1000. Also, the user sets up a file name of image data to be scanned via the application screen 1100.

When the user presses the delivery destination determination button 1101 of the application screen 1100 in step S15, the process proceeds to step S16. In step S16, the application screen control unit 22 of the MFP 10 stores the selected delivery destination folder and the file name setting (setting values) accepted from the user in step S14 in the web storage 28 as setting information for a job setting.

In step S17, the screen data acquisition unit 20 of the MFP 10 sends a screen acquisition request for acquiring screen data of the scan screen 1200 to the web server apparatus 14 and acquires screen data of the scan screen 1200 from the screen data providing unit 30 of the web server device 14. Then, the process proceeds to step S18, in which the function screen control unit 24 of the MFP 10 displays the scan screen 1200 including the job setting based on the setting information stored in the web storage 28 on the operation panel 602 using the acquired screen data.

In step S19, the user can make a change request for changing the job setting via the scan screen 1200. In step S20, the function screen control unit 24 accepts an execution request for executing a scan upload process from the user.

Then, in step S21, the function screen control unit 24 requests the job execution unit 26 to execute the scan upload process according to the job setting. In turn, the job execution unit 26 scans a document using the scanner 606 according to the job setting.

In step S22, the job execution unit 26 uploads the scanned image data of the document to the delivery destination folder of the upload destination server apparatus 16. Then, in step S23, the screen data acquisition unit 20 acquires the screen data of the application screens 1000 and 1100 from the screen data providing unit 30 of the Web server apparatus 14, and displays the application screen 1000 or 1100 on the operation panel 602.

Note that in some embodiments, the request destination of the screen acquisition request for the screen data of the scan screen 1200 (host of the screen data) in step S17 may be different from the request destination of the screen acquisition request for the screen data of the application screens 1000 and 1100 in step S12. Note, however, that in this case, setting values cannot be passed to the scan screen 1200 via the web storage 28.

Also, in some embodiments, the upload destination of the scanned image data uploaded in step S22 may be the same as the request destination of the screen acquisition request for the screen data of the scan screen 1200. Also, in step S23, the scan screen 1200 may be displayed on the operation panel 602 instead of the application screen 1000 or 1100, for example.

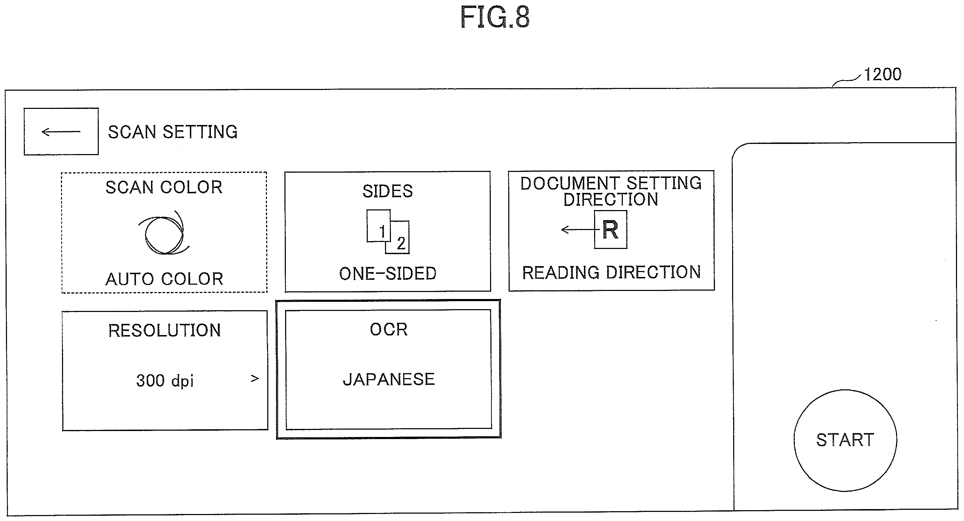

FIG. 8 is a diagram illustrating another example of the scan screen 1200 that has an additional setting item. In the scan screen 1200 illustrated in FIG. 8, "OCR" is added as a setting item specific to the web application.

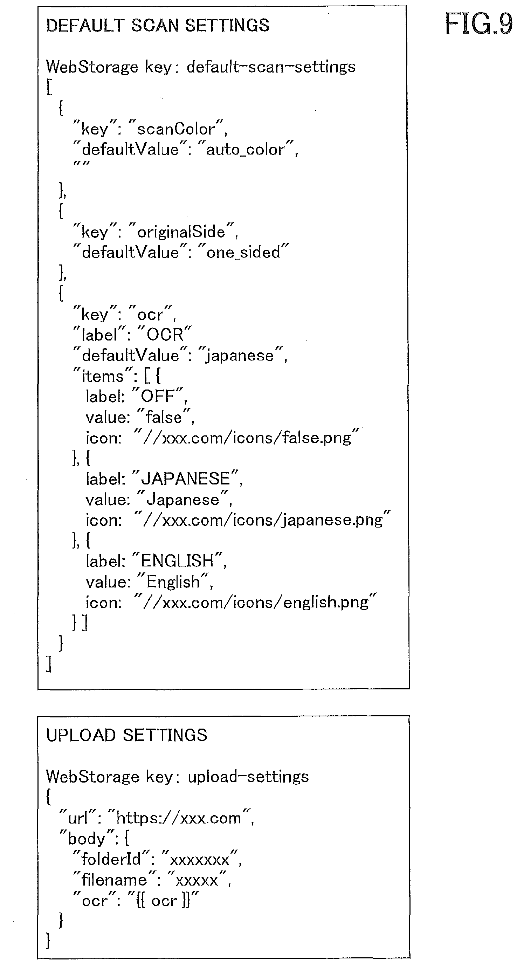

FIG. 9 illustrates example setting items that may be passed to the scan screen 1200 having the additional setting item. In the example illustrated in FIG. 9, the setting item "OCR" is added to the setting items illustrated in FIG. 6.

The default scan settings illustrated in FIG. 9 include a "key" for identifying a setting item, a "label" for displaying the setting item, a "defaultValue" specifying the default value for the setting item, and "items" specifying options for the setting item.

The default scan settings as illustrated in FIG. 9 may be passed from the application screen control unit 22 to the function screen control unit 24 via the web storage 28, for example. The function screen control unit 24 may then display the setting items of the default scan settings of FIG. 9 on the scan screen 1200 as the job setting, for example.

Note that in some embodiments, an icon image may be displayed on the scan screen 1200 by passing a URL of an "icon" that is included in the default scan settings, for example. Also, in some embodiments, the setting value for the additional setting item may be passed as a separate key from the key of the web storage 28 used for passing the default scan settings, for example.

In the upload settings illustrated in FIG. 9, the character string "ocr" identifying the "key" of the additional setting item is specified within double curly braces "{{}}" as "{{ocr}}", and in this way, the setting value can be used upon uploading a corresponding file, for example. Note that although the setting item "orc" is enclosed in double curly braces "{{}}" in the example illustrated in FIG. 9, some other notation may alternatively be used. Also, setting items other than the additional setting item may be specified in the double curly braces "{{}}", including a "key" that can be designated via the scan screen 1200 by default, for example.

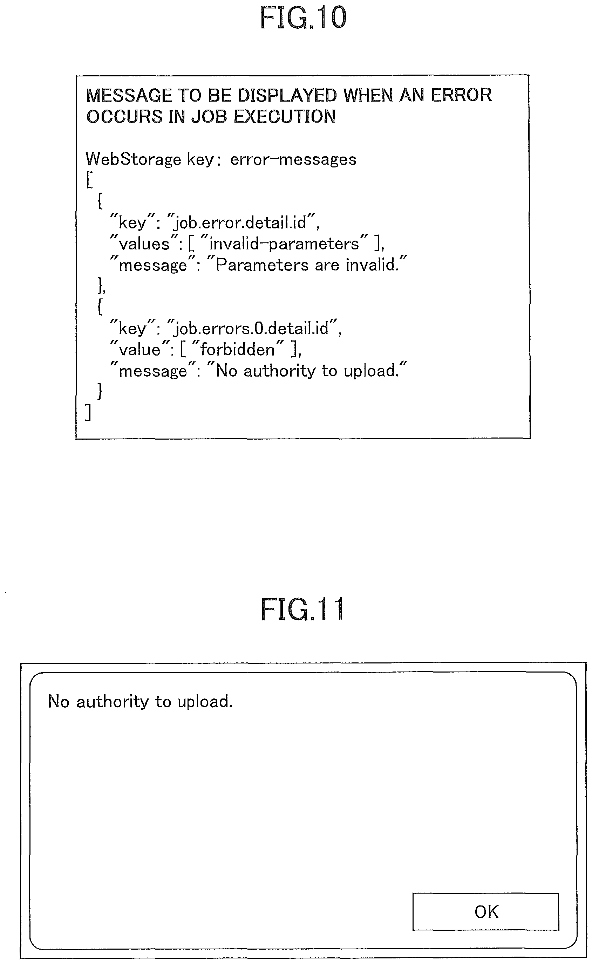

Also, according to an aspect of the present embodiment, an error message to be displayed when an error occurs during execution of an upload job in step S22 may be set up as illustrated in FIG. 10, for example.

FIG. 10 is a diagram illustrating example setting items relating to an error message to be displayed that may be passed to the scan screen 1200. In FIG. 10, the setting items relating to an error message to be displayed when an error occurs in job execution include a "key", "values", and a "message".

In FIG. 10, the "key" specifies the hierarchical structure of a JSON format error response up to the "value". The "key" illustrated in FIG. 10 specifies keys of the hierarchical structure separated by a dot ("."). Note that a notation other than the dot (".") may also be used to specify the "key". When an array is included in the JSON error response, a number, such as "0", may be used to specify an element of the array, for example. Note that an element of the above array may also be specified using some other character string, for example.

When the value of the above "key" corresponds to a character string specified in the "values", a message specified in the "message" described below is to be displayed. The "message" specifies the message to be displayed on the operation panel 602 when conditions specified by the "key" and "values" are satisfied.

FIG. 11 illustrates an example of an error screen that is displayed when an error occurs. The error screen of FIG. 11 displays the error message specified in the "message" of the second element of the setting items illustrated in FIG. 10 (i.e., the error message to be displayed when conditions specified by the "key" and "value" of the second element are satisfied).

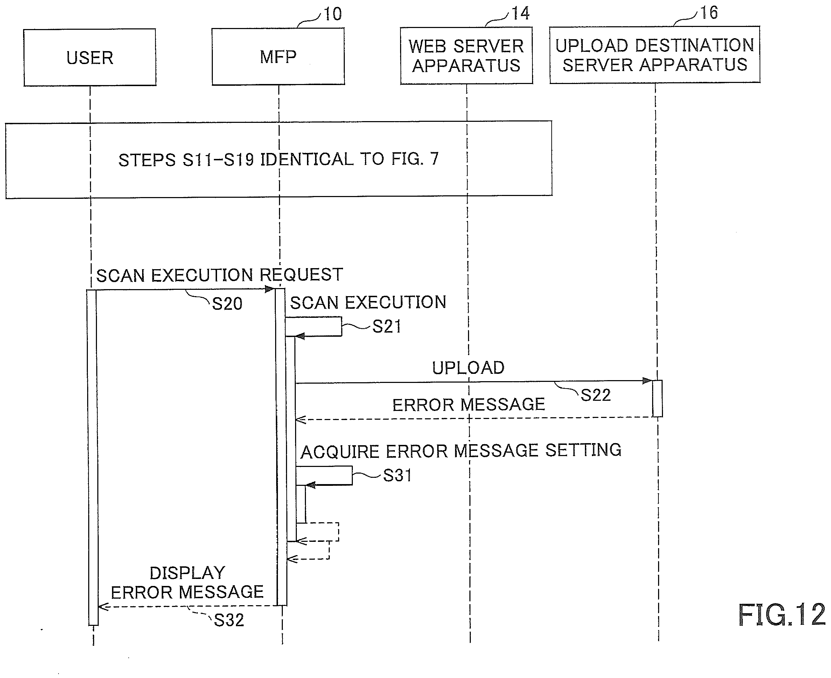

FIG. 12 is a sequence chart illustrating example process operations of the scan upload process when an upload job fails. Note that process steps S11 to S19 of the scan upload process of FIG. 12 are substantially identical to those of FIG. 7, and as such, illustrations of steps S11 to S19 are omitted in FIG. 12.

In step S20, the function screen control unit 24 accepts an execution request for executing a scan upload process from the user. Then, in step S21, the function screen control unit 24 requests the job execution unit 26 to execute the scan upload process according to the job setting. In turn, the job execution unit 26 scans a document using the scanner 606 according to the job setting.

In step S22, the job execution unit 26 attempts to execute the job of uploading the scanned image data of the document to the delivery destination folder of the upload destination server apparatus 16, but fails to successfully execute the job and receives an error message from the upload destination server apparatus 16.

Then, in step S31, the function screen control unit 24 acquires the setting items relating to an error message to be displayed when an error occurs in job execution as illustrated in FIG. 10 as error message settings. For example, the function screen control unit 24 may determine that the received error message matches the conditions of the second element of the setting items of FIG. 10. In this case, the function screen control unit 24 may display the error screen including the error message "No authority to upload." as illustrated in FIG. 11, for example.

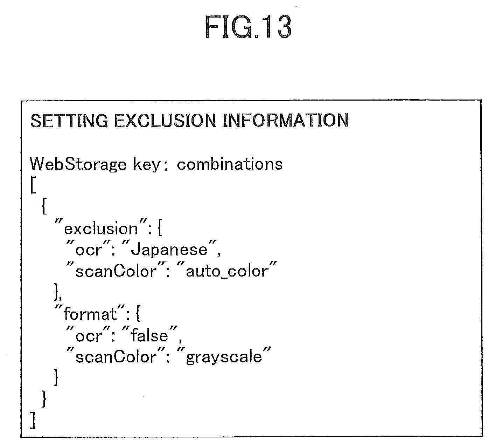

Also, according to an aspect of the present embodiment, setting exclusion information, such as that illustrated in FIG. 13 may be set up with respect to the scan upload process.

FIG. 13 illustrates example setting items relating to setting exclusions that may be passed to the scan screen 1200. The setting exclusion information illustrated in FIG. 13 includes "exclusion" and "format". The "exclusion" specifies a condition for exclusion. The "format" specifies a setting value that is to be changed when the condition specified by the "exclusion" is satisfied.

For example, according to the setting exclusion information of FIG. 13, in a case where the setting value of "scanColor" is initially set to "auto_color", if the setting value of "ocr" is changed to "Japanese", the setting value of "scanColor" is changed to "grayscale". Also, in a case where the setting value of "ocr" is initially set to "Japanese", if the setting value of "scanColor" is changed to "auto_color", the setting value of "ocr" is changed to "false".

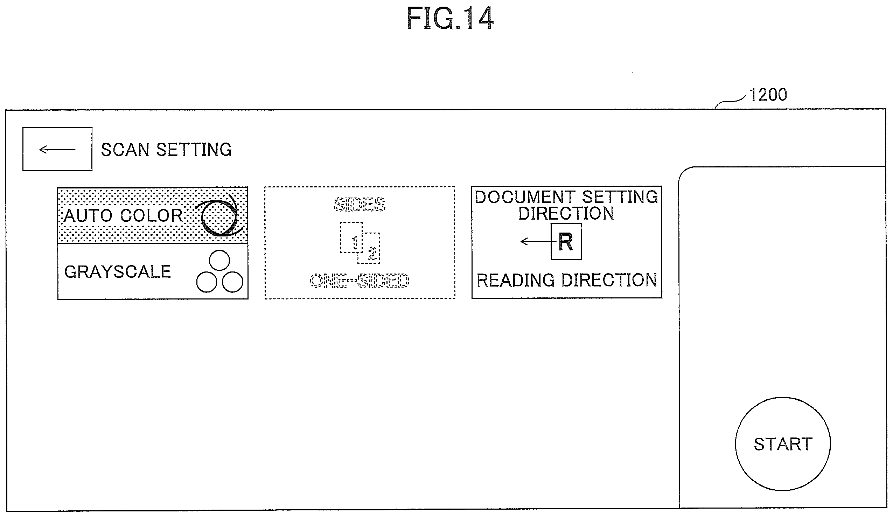

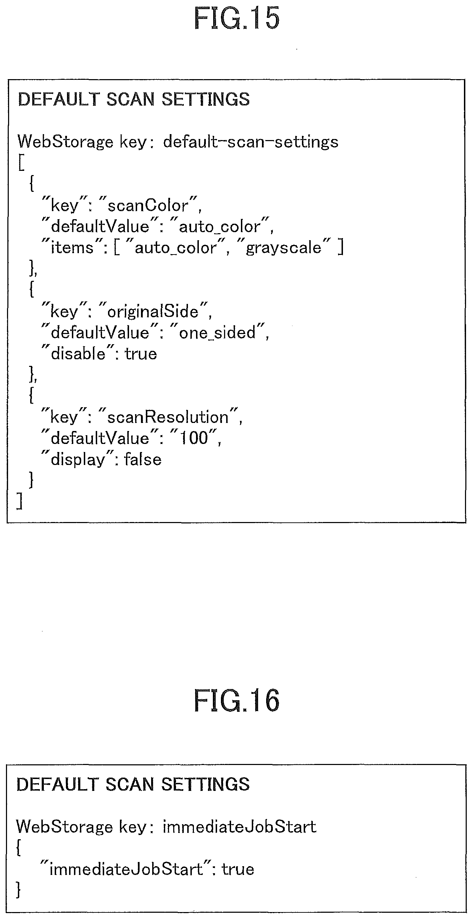

FIG. 14 is a diagram illustrating another example of the scan screen 1200 that reflects settings relating to display. FIG. 15 illustrates example setting items relating to display that may be passed to the scan screen 1200. FIG. 15 illustrates default scan settings including setting items "display", "disable", and "items" as setting items relating to display to be passed to the scan screen 1200.

The "display" is a flag for specifying whether to display a corresponding setting item. The "disable" is a flag for specifying whether the setting value of a corresponding setting item can be changed. The "items" limits setting value options for a corresponding setting item.

For example, the default scan settings illustrated in FIG. 15 specifies that the scan color mode that can be selected is limited to "auto-_color" or "grayscale", the setting relating to the document side to be scanned cannot be changed, and the setting relating to the scan resolution should not be displayed.

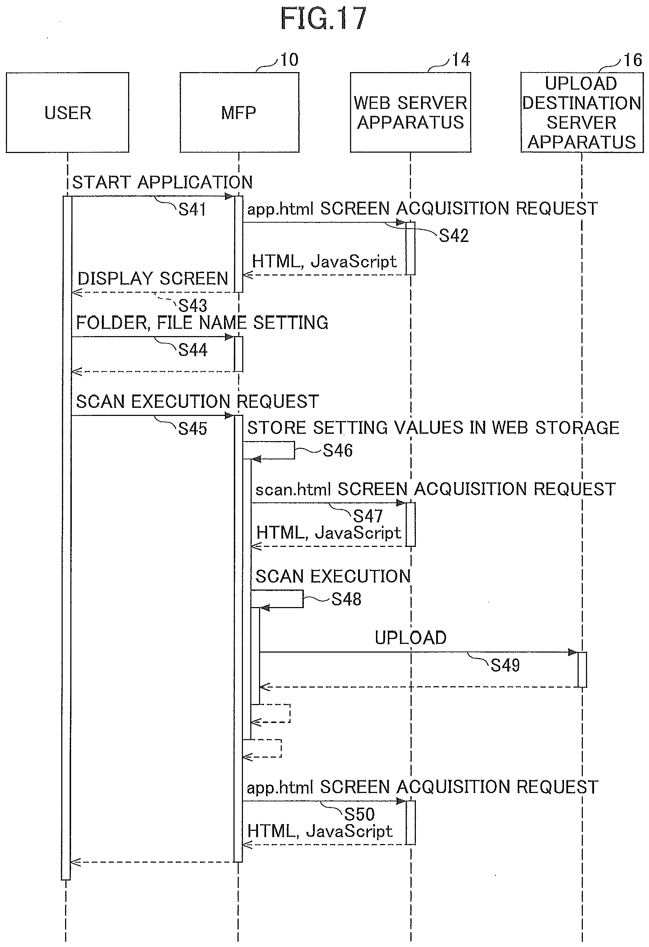

FIG. 16 illustrates an example setting for immediately executing a job passed that is to the scan screen 1200. FIG. 17 is a sequence chart illustrating example process operations of the scan upload process in the case where a job is to be immediately executed. Note that the scan upload process of FIG. 17 includes process steps that may be substantially identical to the process steps of FIG. 7, and as such, overlapping descriptions of such process steps may be omitted as appropriate.

The processes of steps S41 to S46 of FIG. 17 may be substantially identical to the processes of steps S11 to S16 of FIG. 7, and as such, descriptions thereof are omitted. In step S47, the screen data acquisition unit 20 of the MFP 10 sends a screen acquisition request for acquiring screen data of the scan screen 1200 to the web server apparatus 14 and acquires the screen data of the scan screen 1200 from the screen data providing unit 30 of the web server apparatus 14. In the present example, based on the setting for immediately executing a job as illustrated in FIG. 16, for example, the function screen control unit 24 immediately proceeds to step S48 to execute a process of scanning a document using the scanner 606 without displaying the scan screen 1200 on the operation panel 602. Note that processes of steps S49 and S50 following step S48 of FIG. 17 may be substantially identical to those of steps S22 and S23 of FIG. 7.

Further, in some embodiments, when the scan screen 1200 is switched back to the application screen 1000 or 1100, the application screen control unit 22 may acquire the setting values stored in the web storage 28 and reflect the acquired setting values in the application screen 1000 or 1100. For example, when the user wishes to change the file name setting before executing a scan job after the screen has been switched to the scan screen 1200, the setting values passed to the scan screen 1200 may be retained even when the screen is switched back to the application screen 1100. In this way, the user experience may be improved and user satisfaction may increase, for example.

Also, in some embodiments, the application screen 1000 or 1100 may be configured to enable the user to change an operation to be performed after execution of a scan job, such as not retaining setting values after execution of the scan job or deleting the file after printing. In this case, for example, after the scan job has been executed via the scan screen 1200, a query may be used to pass a flag indicating that execution of the scan job has been completed to the web storage 28 or the application screen 1000 or 1100. In this way, detailed control of the web application may be enabled.

Although the present invention has been described above with reference to certain illustrative embodiments, the present invention is not limited to these embodiments, and numerous variations and modifications may be made without departing from the scope of the present invention.

## Claims

1. An input/output device (10) having a web browser (12) installed therein, the input/output device (10) comprising:
a content acquisition unit (20) configured to acquire content of a function screen (1200) for accepting a request relating to a function specific to the input/output device (10) from a user and content of an information setting screen (1000, 1100) for accepting setting information required for generating a job setting from the user;
an information setting screen control unit (22) configured to accept the setting information required for generating the job setting from the user via the information setting screen (1000, 1100) that is displayed by the web browser (12) using the acquired content of the information setting screen and store the accepted setting information required for generating the job setting in a web storage (28) of the web browser (12);
a function screen control unit (24) configured to use the acquired content of the function screen to generate the job setting based on the setting information stored in the web storage (28) and display the generated job setting on the function screen (1200) that is displayed by the web browser (12); and
a job execution unit (26) configured to execute a job using the function specific to the input/output device (10) according to the generated job setting in response to an instruction accepted from the user via the function screen (1200).

2. The input/output device (10) according to claim 1, wherein
the function screen control unit (24) accepts a change request for changing the generated job setting that is displayed on the function screen (1200) from the user.

3. The input/output device (10) according to claim 1 or 2, wherein
the information setting screen control unit (22) stores the setting information required for generating the job setting in an index database instead of the web storage (28); and
the function screen control unit (24) acquires the setting information required for generating the job setting from the index database using a query.

4. The input/output device (10) according to claim 1 or 2, wherein
the function screen control unit (24) specifies a suffix of a key of the web storage (28) in a query when acquiring the setting information stored in the web storage (28).

5. A computer-readable medium storing a program to be executed by an input/output device (10) having a web browser (12) installed therein, the program, when executed, causing the input/output device (10) to implement processes of
acquiring content of a function screen (1200) for accepting a request relating to a function specific to the input/output device (10) from a user and content of an information setting screen (1000, 1100) for accepting setting information required for generating a job setting from the user;
accepting the setting information required for generating the job setting from the user via the information setting screen (1000, 1100) that is displayed by the web browser (12) using the acquired content of the information setting screen and storing the accepted setting information required for generating the job setting in a web storage (28) of the web browser (12);
generating the job setting based on the setting information stored in the web storage (28) using the acquired content of the function screen and displaying the generated job setting on the function screen (1200) that is displayed by the web browser (12); and
executing a job using the function specific to the input/output device (10) according to the generated job setting in response to an instruction accepted from the user via the function screen (1200).

6. An information processing system (1) comprising a content providing apparatus (14) and an input/output device (10) having a web browser (12) installed therein, wherein
the input/output device (10) includes
a content acquisition unit (20) configured to acquire from the content providing apparatus (14), content of a function screen (1200) for accepting a request relating to a function specific to the input/output device (10) from a user and content of an information setting screen (1000, 1100) for accepting setting information required for generating a job setting from the user;
an information setting screen control unit (22) configured to accept the setting information required for generating the job setting from the user via the information setting screen (1000, 1100) that is displayed by the web browser (12) using the acquired content of the information setting screen and store the accepted setting information required for generating the job setting in a web storage (28) of the web browser (12);
a function screen control unit (24) configured to use the acquired content of the function screen to generate the job setting based on the setting information stored in the web storage (28) and display the generated job setting on the function screen (1200) that is displayed by the web browser (12); and
a job execution unit (26) configured to execute a job using the function specific to the input/output device (10) according to the generated job setting in response to an instruction accepted from the user via the function screen (1200).
